# EUROPÄISCHE PATENTANMELDUNG

(11) **EP 0 573 895 A1**
(43) Veröffentlichungstag der Anmeldung: **15.12.1993**
(21) Anmeldenummer: 93108907.2
(22) Anmeldetag: 03.06.1993
(51) Int. Cl.: F04D 29/66

(54) **Abgasturbolader mit einem Radialverdichter**

(30) Priorität: 12.06.1992 DE 4219249
(71) Anmelder: A.G. Kühnle, Kopp & Kausch, D-67227 Frankenthal (DE)
(72) Erfinder: Stönner, Helmut, Ing. (grad), W-6710 Frankenthal 3 (DE)
(74) Vertreter: Klose, Hans, Dipl.-Phys.

(57) **Zusammenfassung**

Ein Abgasturbolader mit einem Radialverdichter enthält ein spiralförmiges Gehäuse (2) mit einem Druckstutzen (8), durch welchen ein verdichtetes Medium, insbesondere Luft, zu einer Austrittsöffnung (5) strömt. Der Abgasturbolader soll dahingehend weitergebildet werden, daß eine wirksame Schalldämpfung gewährleistet wird. Es wird vorgeschlagen, daß ein Schalldämpfer (10) am Ende der Spirale (3) des Gehäuses (2) angeordnet ist und daß im Bereich des Druckstutzens (8) wenigstens eine Ausnehmung (18) vorgesehen ist, über welche die Verbindung wenigstens einer Kammer (24, 25) des Schalldämpfers (10) mit dem zur Austrittsöffnung (5) strömenden Medium erfolgt.

## Beschreibung

Die Erfindung bezieht sich auf einen Abgasturbolader mit einem Radialverdichter, gemäß den im Oberbegriff des Patentanspruchs 1 angegebenen Merkmalen.

Aus der US-A-4 738 548 ist ein derartiger Abgasturbolader mit einem Radialverdichter bekannt. Der Radialverdichter enthält ein Spiralgehäuse mit einem Einlaß sowie mit einem Auslaß für Gas, und zwar insbesondere Luft, welche einem nachgeordneten Verbrennungsmotor in bekannter Weise zugeführt wird. Das Gehäuse enthält einen Einlaß- oder Ansaugstutzen, welcher in Verlängerung der Achse des Verdichterrades angeordnet ist, während der Auslaß- oder Druckstutzen in radialer Richtung des Verdichterrades angeordnet ist. Nach dem Austritt des Gases aus dem Verdichter können Druckschwingungen auftreten, welche dem statischen Ladedruck des Abgasturboladers über-lagert sind, sich in der Ladeluftleitung und einem Ladeluftkühler fortpflanzen und schließlich als Luftschall abgestrahlt werden. Der hierbei auftretende Pfeifton wird im Automobilbau als sehr nachteilig empfunden. Der Pfeifton ändert sich proportional mit der einfachen Drehfrequenz bzw. Drehzahl des Abgasturboladers und ist in einem weiten Arbeits- oder Drehzahlbereich des Abgasturboladers zu hören. Die spektrale Zusammensetzung des Pfeiftones beinhaltet neben der dominanten Grundfrequenz (erste Ordnung der Drehzahl) je nach Ausführung des Verdichterrades auch ganzzahlige harmonische Schwingungen dieser Grundfrequenz, und zwar besonders die der zweiten Ordnung.

Schalldämpfer sind für die unterschiedlichsten Anwendungsfälle in Form von Absorptionsschalldämpfern oder λ /4-Resonatoren bekannt. Nachgeschaltete Schalldämpfer sind zusätzliche Bauteile und bedingen eine zusätzliche Trennstelle in der Leitungsführung. Ferner erfordern sie einen großen Raumbedarf und können zu Einbauschwierigkeiten im Motorraum eines Kraftfahrzeuges führen. Ferner ist ein entsprechender Aufwand für die Lagerhaltung des Schalldämpfers als zusätzliches Bauteil erforderlich. Schließlich sind besondere Maßnahmen zur Aufhängung und Abstützung des Schalldämpfers zusammen mit der dem Radialverdichter nachgeschalteten Druckleitung nötig. Mit dem Gehäuse kombinierte Schalldämpfer sind in derartigen Ausführungsformen bekannt, daß sie höherfrequenten Schall dämpfen, welcher entsprechend der Anzahl der Schaufeln sowie der Winkelgeschwindigkeit des Gebläserades verursacht wird.

Aus der DE-A-28 30 294 ist ein Radialverdichter mit einer Einrichtung zur Absorption akustischer sowie aerodynamischer Druckänderungen bekannt, welche Einrichtung in unmittelbarer Verbindung mit dem Strömungsmittel im Diffusor des Radialverdichters angeordnet ist. Die Einrichtung enthält eine Resonanzkammer, welche mit porösem absorbierendem Material gefüllt ist. Die Reflexionskammer ist ferner mittels Teilern in eine Anzahl kleinerer Kammern unterteilt. Das Absorptionsmaterial ist aIs poröses Blattmaterial mit hohem Strömungswiderstand ausgebildet und es bildet einen Teil der Oberfläche der Diffusorwand. Das in dem vorbekannten Radialverdichter zum Einsatz gelangende Kältemittel strömt in einem geschlossenen Kreislauf und es ergeben sich keine Probleme hinsichtlich im Strömungsmittel enthaltener Fremdkörper. Sollten bei einem offenen System im Strömungsmittel Fremdkörper enthalten sein, so könnten diese sehr leicht den vorbekannten Schalldämpfer bzw. dessen Absorptionsmaterial und die einzelnen Kammern zusetzen, wodurch die Dämpfungswirkung erheblich beeinträchtigt, wenn nicht gar aufgehoben würde. Ein wesentliches Kriterium ist ferner die Unterteilung des Schalldämpfers in schmale Kammern, da ansonsten das durch den Diffusor strömende Kältemittel unter Berücksichtigung der bestehenden Druckverhältnisse auf das Laufrad zurückströmen und somit den Gesamtwirkungsgrad nachteilig beeinflussen würde.

Ferner ist aus der DE-A-23 54 126 ein Radialventilator bekannt, dessen Schalldämpfer unmittelbar das Laufrad, ähnlich einem Leitring, umgibt. Der Schalldämpfer enthält Stirnwände und leitschaufelförmige Querwände, welche mit schalldämmendem Material ausgerüstet sind. Der Schalldämpfer umgibt insgesamt das Laufrad und kann somit nicht ohne weiteres bei einem Radialverdichter vorgesehen werden, welcher ein spiralförmiges Gehäuse mit einem Sammelkanal sowie einem Druckstutzen.

Schließlich ist aus dem DE-U-66 04 795 ein Wirbelstromgebläse bekannt, welches von einem elektrischen Motor mit im wesentlichen gleichbleibender Drehzahl angetrieben wird. Es sind Reflexions- oder Resonanzkammern konzentrisch um den Eintrittsstutzen und den Austrittsstutzen angeordnet und mit verschäumtem Kunststoffmaterial ausgefüllt. Im Strömungsmittel enthaltene Fremdkörper können das geschäumte Kunststoffmaterial verstopfen, wodurch die Dämpfungswirkung zumindest erheblich reduziert wird. Das Wirbelstromgebläse weist keine Spirale auf und Abzweigstutzen bzw. Anschlußleitungen müssen aufgrund der genannten Refelxionskammern eine erheblich vergrößerte Länge aufweisen.

Der Erfindung liegt die Aufgabe zugrunde, den Abgasturbolader der genannten Art dahingehend weiterzubilden, daß eine wirksame Schalldämpfung gewährleistet wird. Die Schalldämpfung soll ferner in einem weiten, über im wesentlichen fünf akustische Terzbandbreiten reichenden veränderlichen Pfeifton-Frequenzbereich erfolgen. Außerdem soll eine wirksame Dämpfung der störenden harmonischen Schwingung zweiter Ordnung, bezogen auf die Pfeifton-Grundfrequenz, erfolgen. Es soll eine hohe Funktionssicherheit gewährleistet und ein kompakter, platzsparender Aufbau erreicht werden.

Die Lösung dieser Aufgabe erfolgt nach den im kennzeichnenden Teil des Patenanspruchs 1 angegebenen Merkmalen.

Der vorgeschlagene Abgasturbolader zeichnet sich bei kompakter Bauweise durch einen reduzierten Herstell- und Materialaufwand aus, da der Schalldämpfer entweder ganz oder zumindest teilweise in das Verdichtergehäuse integriert und/oder unmittelbar verbunden ist. Durch den direkt an der Austrittsöffnung des Druckstutzens vorgesehenen Schalldämpfer erfolgt die Auslöschung bzw. Reduzierung der Druckschwingungen bereits unmittelbar im Bereich vor den angeschlossenen Leitungen, wodurch in besonders zweckmäßiger Weise einer nachteiligen Schallausbreitung entgegengewirkt wird.

Der vorgeschlagene integrierte Schalldämpfer ist in erster Näherung ein Reflexionsschalldämpfer, wobei die Abmessungen auf 1/4 der Wellenlänge λ der Schallwelle abgestimmt sind. Die erforderliche breitbandige Dämpferwirkung wird durch einen großvolumigen Reflexionsraum erreicht, dessen auf die Wellenlänge bezogenen Abmessungen sich insbesondere kontinuierlich verändern. Um Querreflexionen zu vermeiden, ist der Reflexionsraum in zweckmäßiger Weise durch Trennwände in Teilräume unterteilt. Diese Teilräume sind weder mit ausgeschäumtem noch mit losem schalldämmendem Material zur Schallabsorption ausgefüllt und derartiges Material kann somit bei einen Ablösen auch nicht in den Verbrennungsraum der an den Abgasturbolader angeschlossenen Maschine gelangen. Die Dämpfung des Pfeiftones zweiter Ordnung geschieht durch einen Reflexionsraum, dessen Abmessungen auf 1/4 der Wellenlänge des Pfeiftones zweiter Ordnung abgestimmt ist. In besonders zweckmäßiger Weise wird dieser Raum durch eine Kanalumlenkung um etwa 90 Winkelgrade erreicht, wobei zusätzlicher Raumbedarf vermieden wird. Die störenden Pfeiftöne zweiter Ordnung treten gleichfalls aufgrund ihres harmonischen Verhältnisses zur Grenzfrequenz in einem weiten Bandbereich auf und erfindungsgemäß sind die Gehäuseabmessungen dementsprechend variabel ausgebildet. Die genannte 90-Gradumlenkung des Reflexionsraumes kann im Rahmen der Erfindung entweder in Umfangsrichtung oder axial zur Achse des Druckstutzens erfolgen und somit die äußeren Abmessungen insgesamt klein gehalten werden.

Es ist eine einteilige Ausführung geschaffen worden, welche gegen angreifende äußere Beanspruchungen, und zwar insbesondere Schwingungen des Kraftfahrzeugmotors, besonders widerstandsfähig ist. Durch die Integration des Schalldämpfers an das Radialverdichtergehäuse wird eine zusätzliche Trennstelle vermieden, wobei insgesamt ein platzsparendes Gehäuse realisiert wird. Eine breitbandige Dämpferwirkung wird mit minimalem Fertigungs- und Lagerhaltungsaufwand realisiert und zudem ist der Schalldämpfer ohne Schwierigkeiten auf einen besonders störenden Frequenzbereich abstimmbar. Der vorgeschlagene integrierte Schalldämpfer ist in erster Näherung ein Reflexions-Schalldämpfer, wobei die Abmessungen auf ein Viertel der Wellenlänge der Schallwelle abgestimmt ist. Der Schalldämpfer ist in zweckmäßiger Weise derart ausgelegt, daß der störende Frequenzbereich hinreichend stark gedämpft wird. Der Schalldämpfer ist in das Verdichtergehäuse integriert, ohne die in der Regel engen Einbauverhältnisse, insbesondere im Motorraum eines Kraftfahrzeuges, mit der anschließenden Ladedruckleitung wesentlich zu beeinträchtigen.

Um die radialen und axialen Abmessungen klein zu halten, werden zur Schallreflexion die Schallwellen, unter Berücksichtigung der Reflexionslänge, derart umgelenkt, daß entweder eine radiale oder axiale Ausbreitung erfolgt. In besonders zweckmäßiger Weise wird die Breitbandwirkung durch asymmetrische Geometrie des Gehäuses zur Erzeugung unterschiedlicher Reflexionslängen vorgegeben. Diese unterschiedlichen Reflexionslängen werden bevorzugt durch schräge Flächen, durch exzentrisch angeordneten Ein- und Austritt im Schalldämpfergehäuse oder durch unterschiedliche Kanallängen vorgegeben. Die Reduzierung der Druckschwingungen findet bereits im Druckstutzen oder im Anschlußbereich der Druckleitung statt, so daß insgesamt die Einbauabmessungen recht kurz gehalten werden. Schließlich kann der Deckel des Schalldämpfergehäuses wahlweise mit einem Krümmer versehen sein, welcher den unterschiedlichen Einbausituationen, insbesondere eines Gummischlauches am Verdichterstutzen, gerecht wird. Aufgrund der vollständigen oder zumindest teilweisen Integration des Schalldämpfers in das Verdichtergehäuse entfällt eine weitere Trennstelle in der Druckleitung, wodurch kein weiterer Montageaufwand beim Anwender notwendig wird.

Weiterbildungen und Ausgestaltungen der Erfindung sind in den Unteransprüchen enthalten und ergeben sich aus der nachfolgenden Beschreibung.

Die Erfindung wird anhand der in der Zeichnung dargestellten besonderen Ausführungsbeispiele näher erläutert. Es zeigen:
- Fig. 1: teilweise eine Ansicht in axialer Richtung des Druckstutzens eines Radialverdichters eines Abgasturboladers sowie teilweise geschnitten den integrierten Schalldämpfer,
- Fig. 2: einen Schnitt entlang Schnittlinie II gemäß Fig. 1,
- Fig. 3: eine Darstellung eines weiteren Ausführungsbeispiels ähnlich Fig. 1,
- Fig. 4, 5: ein drittes Ausführungsbeispiel mit exzentrisch angeordnetem Schalldämpfer,
- Fig. 6, 7: eine vierte Ausführungsform mit Schalldämpfer in radialer Bauart,
- Fig. 8, 9: eine Ausführungsform, bei welcher die Außenwand des Schalldämpfers im wesentlichen parallel zur Achse des Ansaugstutzens angeordnet ist,
- Fig. 10, 11: eine weitere Ausführungsform ähnlich Fig. 8, 9 mit einer in die Kammer integrierten Teilwand,
- Fig. 12, 13: eine weitere Ausgestaltung, wobei die Teilwand über der Ausnehmung angeordnet ist,
- Fig. 14, 15: eine besondere Ausgestaltung mit zwei getrennten, hintereinander geschalteten Reflexionskammern.

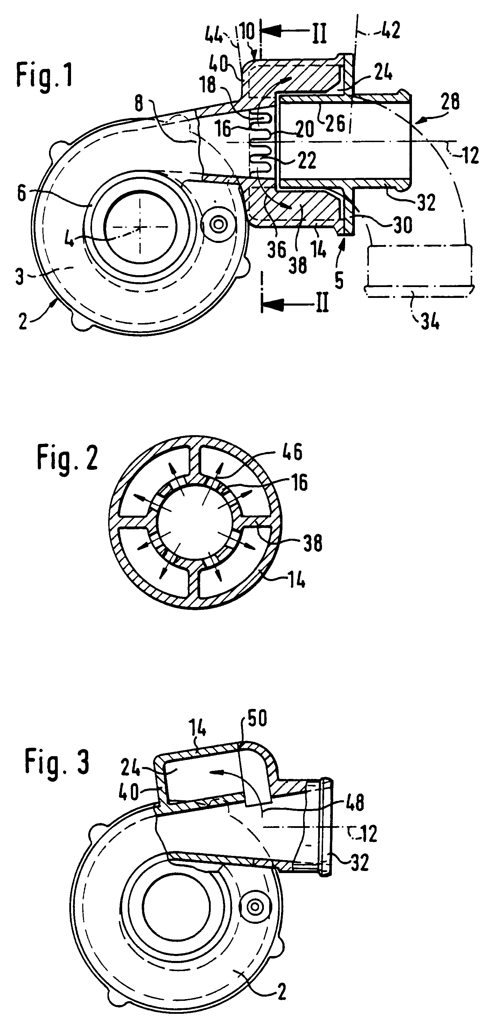

Fig. 1 zeigt eine Ansicht auf ein Spiralgehäuse 2 eines Radialverdichters, welcher Bestandteil eines hier nicht weiter dargestellten Abgasturboladers ist und dessen Achse 4 senkrecht zur Zeichenebene steht. Die Spirale 3 des Gehäuses 2 endet im Bereich einer Austrittsöffnung 5. Das Gehäuse 2 weist den zur Achse 4 koaxialen Ansaugstutzen 6 sowie einen Druckstutzen 8 auf, welcher die Austrittsöffnung 5 aufweist und durch welchen die mit dem Radialverdichter komprimierte Luft radial ausströmt.

Der Druckstutzen 8 weist im Bereich seiner Öffnung einen Schalldämpfer 10 auf, welcher eine zur Stutzenachse 12 koaxiale, ringförmige Außenwand 14 aufweist. In direkter Verlängerung des Druckstutzens 8 ist ferner eine Innenwand 16 vorhanden, welche in Umfangsrichtung eine Anzahl beabstandeter und radial durchgehender Ausnehmungen 18 enthält. Diese Ausnehmungen 18 sind als Schlitze ausgebildet, welche sich vom Ende 20 aus in Richtung zum Druckstutzen 8 erstrecken. Die Innenwand 16 besteht somit aus einer Anzahl sich vom Druckstutzen 8 weg erstreckender Stege 22, zwischen welchen die genannten Schlitze liegen. Alternativ zu den hier dargestellten Schlitzen können die Ausnehmungen 18 der Innenwand 16 im Rahmen dieser Erfindung als Bohrungen ausgebildet sein. Entscheidend ist, daß der Schall durch die Ausnehmungen 18 in die den Druckstutzen am Ende zumindest teilweise umgebende Kammer bzw. Kammern 24 gelangt.

Wie ersichtlich, wird die genannte Kammer 24 radial innen zum einen von der Innenwand 16 und zum anderen durch eine an letztere anschließende weitere Innenwand 26 begrenzt. Diese weitere Innenwand 26 ist Bestandteil eines Einsatzkörpers 28, welcher einen Deckel 30 sowie einen Anschlußstutzen 32 aufweist. Der Einsatzkörper 28 ist im Bereich des Außenrandes des Deckels 30 mit der Außenwand 14 des Verdichtergehäuses 2 fest verbunden. Mit strichpunktierten Linien 34 ist eine gekrümmte Ausführungsform des Anschlußstutzens angedeutet. So kann in zweckmäßiger Weise durch Drehung des als Krümmer ausgebildeten Anschlußstutzens den unterschiedlichen Einbausituationen durch Drehung des Einsatzkörpers 28 bezüglich der Stutzenachse 12 entsprochen werden. Am Ende des Druckstutzens 8 ist somit ein Schalldämpfer mit Kammern oder Reflexionsräumen vorhanden, in welchen Schallwellen durch die Ausnehmungen 18 hindurchgelangen, gemäß den Pfeilen 36 umgelenkt werden und in Richtung der Stutzenachse 12 axial sich ausbreiten.

Der Schalldämpfer enthält ferner Trennwände 38, welche insbesondere in Axialebenen angeordnet sind und Querreflexionen oder Querwellen-Ausbreitungen der Reflexionskammer 24 unterbinden. Der Deckel 30 und eine Rückwand 40, welche die einteilige Verbindung der Außenwand 14 mit der Innenwand 16 bildet, liegen im wesentlichen parallel zueinander und die wirksame Reflexionslänge ist somit praktisch sowohl in Umfangsrichtung als auch in radialer Richtung der Kammer 24 gleich groß. Aufgrund dieser symmetrischen Ausgestaltung erfolgt die Dämpfung in einem vorgegebenen vergleichsweise schmalen Frequenzbereich. Die Abstimmung auf den Störfrequenzbereich erfolgt insbesondere durch Längenänderung der geschlitzen Innenwand 16 in Abstimmung mit der weiteren Innenwand 26 des Einsatzkörpers 28. Ersichtlich führt eine Verkürzung der Reflexionskammer in axialer Richtung beispielsweise zu einer Erhöhung des Frequenzbereiches.

Eine besonders zweckmäßige und den Erfordernissen der Praxis gerecht werdende Breitbandwirkung wird bevorzugt durch asymmetrische Geometrien des Gehäuses 2 und/oder des Einsatzkörpers 28 erreicht. So kann beispielsweise der Deckel 30 entsprechend der strichpunktierten Linie 42 bezüglich der Stutzenachse 12 geneigt angeordnet sein und/oder entsprechend die Rückwand 40 gemäß der gestrichelten Linie 44. Ersichtlich sind somit über den Umfang gesehen unterschiedliche Reflexionslängen und somit die notwendige Breitbandwirkung realisiert.

Fig. 2 zeigt einen Schnitt durch den integrierten Schalldämpfer entlang der Schnittlinie II gemäß Fig. 1, wobei hier die in Axialebenen liegenden vier Trennwände 38 zwecks Unterteilung in vier Reflexionskammern klar zu erkennen sind. Diese als Rippen ausgebildeten Trennwände 38 sind ebenso wie die Außenwand 14 und die Innenwand 16 integrale Bestandteile des Verdichtergehäuses. Wie in Verbindung mit Fig. 1 ersichtlich, erstrecken sich diese Trennwände 38 in axialer Richtung über die Innenwand 16 hinaus entlang der Außenfläche der weiteren Innenwand 26 des Einsatzkörpers 28. Durch die Ausnehmungen 18 gelangen die Schallwellen radial entsprechend den Pfeilen 46 nach außen in die jeweilige Reflexionskammer 24 und werden in dieser dann gemäß obenstehenden Ausführungen in axialer Richtung umgelenkt. Des weiteren kann eine asymmetrische Ausbildung und eine ausgeprägte Breitbandwirkung durch einen schrägen Schnitt der als Schlitze ausgebildeten Ausnehmungen 18 realisisert werden, welche somit unterschiedliche Längen in axialer Richtung aufweisen.

Bei der in Fig. 1 dargestellten Ausführungsform ist die komplette Außenwand 14 Bestandteil des Verdichtergehäuses, während die Innenwand in zwei Teile unterteilt ist, und zwar die Innenwand 16 des Gehäuses und die weitere Innenwand 26 des Einsatzkörpers 28. Entsprechend kann bedarfsweise auch die Außenwand zusammengesetzt sein bzw. der Einsatzkörper bzw. dessen Deckel einen Teil der Außenwand aufweisen. Ferner kann der Verbindungsbereich anstelle der dargestellten Anordnung in einer Radialebene, beispielsweise koaxial zur Stutzenachse 12, in Umfangsrichtung liegen. Die Dämpfung des Pfeiftones zweiter Anordnung geschieht infolge der 90-Grad-Umlenkung bereits nachdem die Schallwellen entsprechend den Pfeilen 46 die Ausnehmungen durchlaufen haben an der gegenüberliegenden Außenwand 14 des Gehäuses. Das Maß von 1/8 der Wellenlänge ist mit dem Abstand zwischen der Innenseite der Ausnehmungen 18 und der Innenseite der Außenwand 14 vorgegeben. Die Breitbandwirkung bezüglich der zweiten Ordnung wird dadurch erreicht, daß die Mittelpunkte von der ringförmig angeordneten Außenwand 14 und von den ringförmig angeordneten Ausnehmungen 18 um einen definierten Abstand auseinanderliegen.

Im Einsatzkörper 28 kann, unabhängig von der konkreten jeweiligen Ausführungsform, ohne weiteres aus einem anderen Werkstoff bestehen als das Gehäuse 2 des Radialverdichters. Er kann bedarfsweise insbesondere aus Kunststoff bestehen. Es ist ein Verbindungsbereich 50 mit dem Gehäuse 2 vorhanden und vor allem bei Fertigung des Einsatzkörpers 28 aus Kunststoff kann eine Klebeverbindung besonders zweckmäßig sein.

Fig. 3 zeigt einen rückwärts gekrümmten Schalldämpfer axialer Bauart, bei welchem der Schall gemäß dem Pfeil 48 im Bereich des Einsatzkörpers 28 radial nach außen und dann rückwärts axial in die Refelexionskammer 24 gelenkt wird. Der Schalldämpfer erstreckt sich, bezogen auf die Stutzenachse 12, nur über einen vorgegebenen Winkelbereich in der Größenordnung von 100 Winkelgraden. Die Reflexionskammer 24 erstreckt sich weitgehend axial und die Schallwellen werden aber entgegen der Strömungsrichtung des Mediums des Druckstutzens geführt. Auch hier kann die Breitbandigkeit durch geneigte Anordnung der Rückwand 40 erreicht werden. Die Außenwand der Spirale 2 bildet hier gleichzeitig die Innenwand des Schalldämpfers, was zu einer erheblichen Gewichtsersparnis beiträgt.

Wie ferner im Vergleich mit Fig. 1 ersichtlich, ragt das freie Ende des Anschlußstutzens 32 bei dieser Ausführungsform nicht über die vorgegebene Außenkontur des Verdichtergehäuses 2 hinaus. Im Vergleich mit einem Radialverdichter ohne Schwingungsdämpfer, müssen bei dieser sehr kompakten Ausführungsform keine Änderungen der anzuschließenden Leitungen erfolgen.

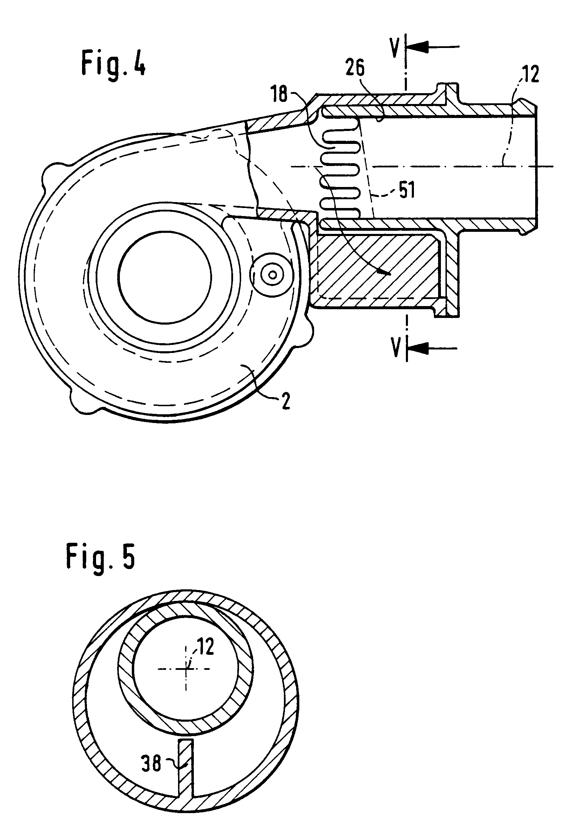

Fig. 4 und 5 zeigen eine weitere Ausführungsform mit exzentrischer Anordnung des Schwingungsdämpfers bezüglich der Stutzenachse 12. Es wird hierbei einseitig, und zwar gemäß Zeichnung im Bereich der oberen Seite des Druckstutzens, Platz eingespart. Diese Ausführungsform gelangt zweckmäßig bei ungünstiger, einseitiger Führung von anderen Leitungen, Motorkomponenten oder dergleichen zum Einsatz. Diese extrem exzentrische Anordnung erlaubt auch eine besonders gute Dämpfung des Pfeiftones zweiter Ordnung. Die Innenwand 26 des Einsatzkörpers 28 erstreckt sich bis zur Rückwand 40 und enthält ferner die Ausnehmungen 18, welche auch hier als Schlitze ausgebildet sind. Durch die Linie 51 sind die in Umfangsrichtung unterschiedlich langen Schlitze im Hinblick auf eine Breitbandwirkung angedeutet. Es versteht sich, daß auch bei dieser Ausführungsform die Ausnehmungen als Bohrungen ausgebildet sein können, und durch entsprechende Dimensionierung die Abstimmung auf den störenden Frequenzbereich problemlos durchführbar ist. Es bleibt festzuhalten, daß jeder der hier dargestellten Schlitze durch eine Anzahl von Bohrungen ersetzt werden kann.

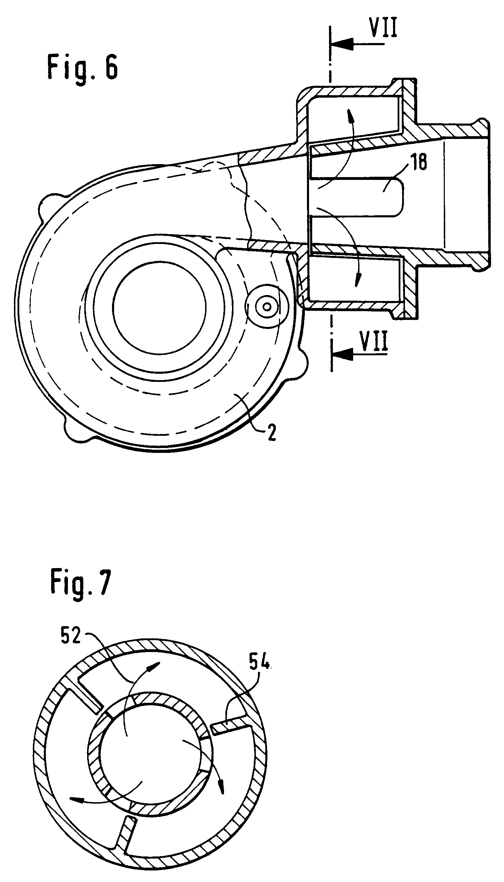

In Fig. 6 und 7 ist eine weitere Ausführungsform dargestellt, bei welcher die Schallwellen gemäß den Pfeilen 52 in Umfangsrichtung abgelenkt werden. Die Schallwellen breiten sich somit in Umfangsrichtung aus, wobei die wirksame Reflexionslänge durch Wände 54 definiert wird. Werden beispielsweise statt der drei in Fig. 7 abgebildeten Reflexionswände 54 vier derartige Wände vorgesehen, so ist die Reflexionslänge ersichtlich kleiner. Die jeweilige Wand 54 liegt nahe der zugeordneten Ausnehmung 18. Durch Drehen des Einsatzkörpers 28 um die Stutzenachse 12 kann die Abstimmung auf den störenden Frequenzbereich erfolgen. Die Anzahl der Ausnehmungen 18, welche wiederum als Schlitze in der Innenwand des Einsatzkörpers ausgebildet sind, entspricht der Anzahl der Wände. Die Abstimmung auf den störenden Frequenzbereich erfolgt durch Veränderung der Kammerlänge in Umfangsrichtung, was beispielsweise durch Verbreiterung der Schlitze 8 und /oder durch entsprechende Bohrungen in der Innenwand 26 erfolgen kann. Schließlich kann in besonders zweckmäßiger Weise die Breitbandwirkung dadurch erreicht werden, daß in Umfangsrichtung die Abstände der Wände 54 zueinander unterschiedlich vorgegeben werden.

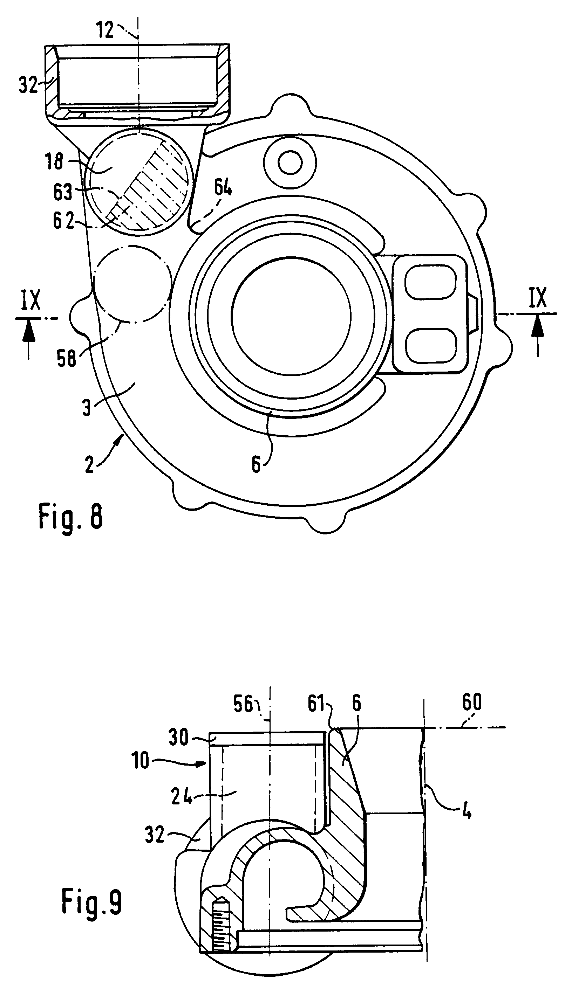

Fig. 8 und 9 zeigen eine besondere Ausgestaltung der Erfindung, bei welcher die Außenwand 14 des die Reflexionskammer 24 enthaltenden Schalldämpfers 10 in der Richtung des Ansaugstutzens 6 am Spiralgehäuse 2 angeordnet ist, wobei die Achse 56 des Schalldämpfers 10 im wesentlichen parallel zur Achse 4 des Ansaugstutzens 6 liegt. Wird das Gehäuse 2 mit dem Ansaugstutzen 6 und der Außenwand 14 durch ein Gießverfahren gefertigt, so ergeben sich durch die parallele Ausrichtung des Gehäuses 14 zum Ansaugstutzen gußtechnische Vorteile. Bedarfsweise kann der Schalldämpfer bzw. dessen Außenwand 14 separat gefertigt und nachträglich an einem bereits bestehenden Spiralgehäuse 2 angebracht werden. Obgleich die in den Fig. 8 und 9 dargestellte, im wesentlichen zylindrische Ausbildung der Außenwand 14 sich als besonderes zweckmäßig im Hinblick auf die Herstellung in einem Gießverfahren erwiesen hat, kann die Außenwand 14 auch eine andere Formgebung aufweisen. Der Schalldämpfer 10 enthält innerhalb der Außenwand 14 die Kammer 24 und ist im Bereich der Austrittsöffnung bzw. am Ende der Spirale 3 des Gehäuses 2 angeordnet. Im Rahmen der Erfindung kann der Schalldämfper mit der Reflexionskammer auch noch weiter einwärts auf der Spirale 3 angeordnet werden, wie es mittels den strichpunktierten Linien 58 angedeutet ist. Selbst wenn bei einer solchen Positionierung des Schalldämpfers nicht die gesamte Strömung und somit auch nicht der gesamte Luftschall erfaßt wird, können besondere Einbaubedingungen im Motorraum eines Kraftfahrzeuges eine derartige Positonierung des Schalldämpfers als besonders zweckmäßig erscheinen lassen. Die zum Anschlußstutzen 32 im wesentlichen orthogonal ausgerichtete Außenwand 14 und somit die Kammer 24 ist mit einem Deckel 30 abgeschlossen. In zweckmäßiger Weise ist die Höhe des Anschlußstutzens 14 und des Deckels 30 derart vorgegeben, daß er höchstens bis zu einer Ebene 60 heranreicht, in welcher die Vorderkante 61 des Ansaugstutzens 6 liegt. Der Schalldämpfer 10 braucht somit praktisch kein zusätzliches, über die Gesamt-Außenkontur des Abgasturboladers hinausgehendes Bauvolumen, sondern nutzt optimal den zur Verfügung stehenden Raum.

Die Ausnehmung 18, über welche das Strömungsmedium mit der Kammer 24 des Schalldämpfers in Verbindung steht, ist eine Teilöffnung. Gemäß Fig. 8 erstreckt sich die Ausnehmung 18 etwa über einen Halbkreis, und mit gestrichelter Schraffur 62 ist ein Wandteil angedeutet, welches das Innere der Spirale vom Inneren der Kammer 24 trennt. Die Ausnehmung 18 endet an einer Kante 63 des Wandteils des Spiralgehäuses 2. Dieses mittels der Schraffur 62 angedeutete Wandteil entspricht der Außenwand des Spiralgehäuses, wenn dort kein Schalldämpfer vorgesehen wäre. In der Kammer 24 selbst ist jedoch keine Teilebene oder Trennwand vorhanden. Die Größe der Ausnehmung 18 wird entsprechend den Erfordernissen vorgegeben. Wie aus Fig. 8 ersichtlich, weist die Ausnehmung 18 eine Größe im Bereich zwischen 40 und 60 % der Grundfläche der Kammer 24 auf. Bei dieser Ausführungsform ist die Grundfläche entsprechend der zylindrischen Ausgestaltung der Außenwand 14 eine Kreisfläche in einer Radialebene bezüglich der Achse 56 des Schalldämpfers 10. In besonders zweckmäßiger Weise wird die Ausnehmung 18 in einem möglichst großen Abstand zur Zunge 64 angeordnet, um eine direkte Beeinflussung der Strömung zu vermeiden. Schließlich sei ausdrücklich darauf hingewiesen, daß durch die Ausbildung der Ausnehmung 18 als eine Teilöffnung in besonders zweckmäßiger Weise eine gute Breitbandwirkung hinsichtlich des Dämpfungsverhaltens erreicht wird.

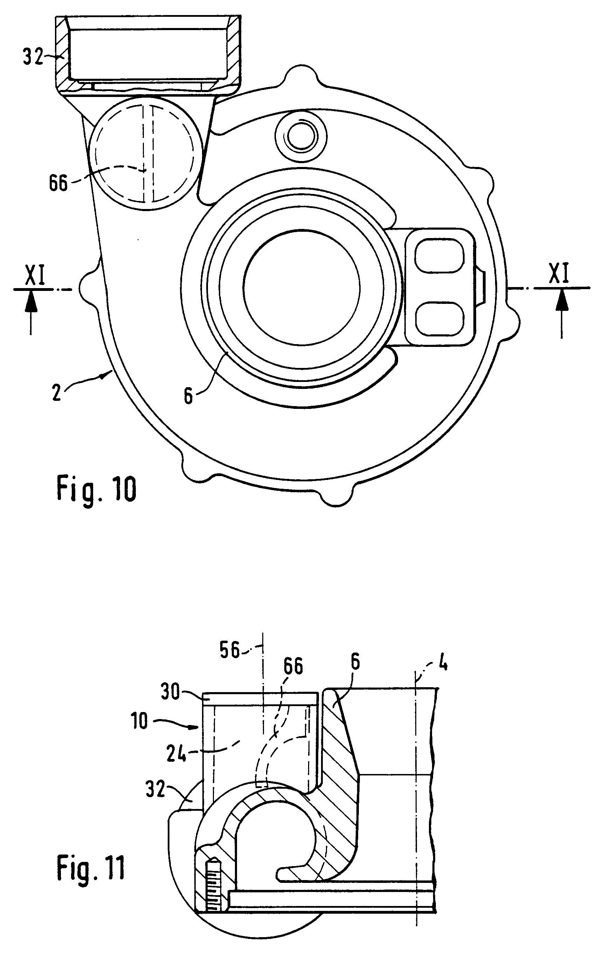

In der Ausführungsform gemäß Fig. 10 und 11 erstreckt sich die Ausnehmung 18 über die gesamte Grundfläche, hier eine Kreisfläche, der Reflexionskammer 24. In die Kammer 24 ist eine Teilwand 66 integriert, die in vorteilhafter Weise an dem Deckel 30 angeordnet ist. Wie aus Fig. 11 unmittelbar ersichtlich, ist die Kammer 24 in zwei Teilkammern unterschiedlicher Größe unterteilt. Diese beiden Teilkammern sind zweckmäßig derart ausgelegt, daß die eine Teilkammer, gemäß Fig. 11, links der Teilwand 66 zur Dämpfung des Pfeiftons erster Ordnung ausgelegt ist, während die rechte Teilkammer zur Dämpfung des Pfeiftones zweiter Ordnung ausgelegt ist. Durch die abgerundete Formgebung der Teilwand 66 wird ferner eine verbesserte Breitbandigkeit des Dämpfungsverhaltens erreicht.

Die Größe und Form der Teilwand und damit die Aufteilung in die beiden Teilkammern liegt gemäß Fig. 10 bei etwa 50 % der radialen Grundfläche, wobei ohne weiteres auch Bereiche zwischen 40 und 60 % der Grundfläche vorgebbar sind. Durch die Form der Teilwand 66 sowie die Unterteilung der Grundfläche erfolgt in zweckmäßiger Weise eine Optimierung für den jeweiligen Einsatzzweck. Auch kann die Teilwand 66 den Erfordernissen entsprechend bezüglich der Achse 56 in einer gegenüber Fig. 10 verdrehten Position angeordnet sein.

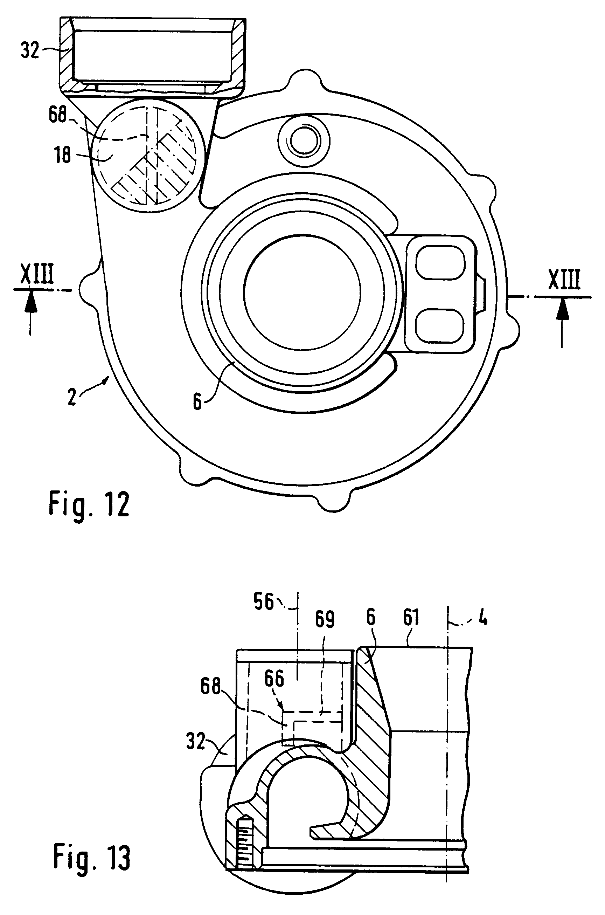

Eine weitere Ausgestaltung der Erfindung ist in den Fig. 12 und 13 dargestellt, wobei sich die Ausnehmung 18 wiederum über die gesamte Grundfläche der Kammer 24 erstreckt. Die Teilwand 66 weist eine abgewinkelte Form der Art auf, daß ein erster Teil 68 im wesentlichen parallel zur Achse 56 und ein zweiter Teil 69 im wesentlichen orthogonal zur Achse 56 verläuft. Die axiale Länge des Teiles 68 und/oder die radiale Größe des Teiles 69 werden den Erfordernissen entsprechend vorgegeben. Ähnlich der Ausführungsform gemäß Fig. 8, 9 ist die Ausnehmung 18 wiederum als etwa halbkreisförmige Teilöffnung ausgebildet. Der im wesentlichen achsparallele Teil 68 ist bezüglich der Kante 63 der Ausnehmung 18 verdreht, so daß die derart gebildeten Teil-Reflexionskammern Verbindung zum Strömungsmedium aufweisen.

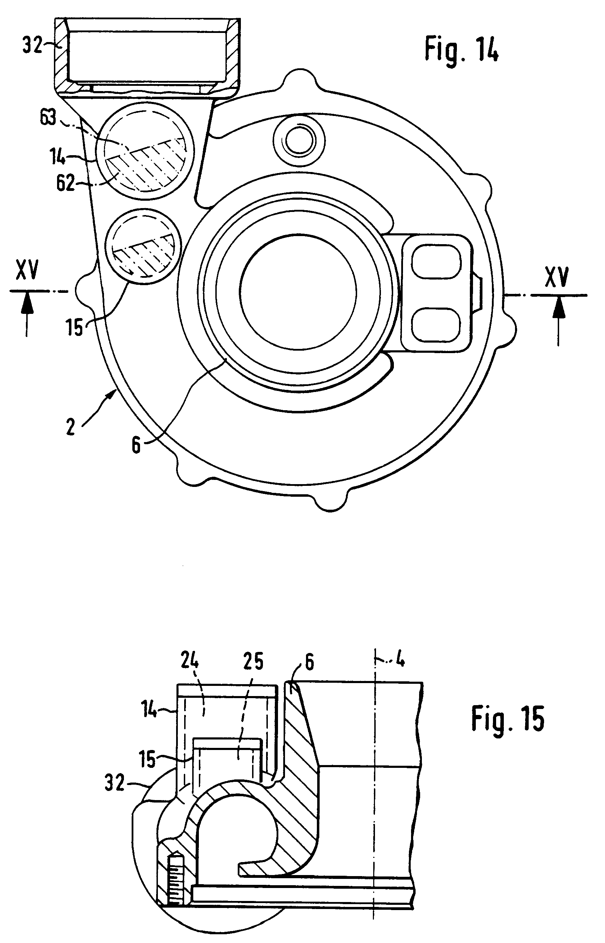

Die Ausführungsform gemäß Fig. 14 und 15 enthält zwei separate Reflexionskammern 24, 25, welche jeweils zylindrische Außenwände 14, 15 aufweisen. Die beiden Reflexionskammern 24, 25 sind jeweils als Zylinder ausgebildet und in Strömungsrichtung hintereinander geschaltet. Die Längen der Kammern 24, 25 weisen ein Verhältnis von ca. 2:1 auf und sind entsprechend zur Dämpfung der Schwingungen der ersten und zweiten harmonischen Schwingung bzw. des Pfeiftones dimensioniert. Bei dieser Ausführungsform weisen die beiden separaten Reflexionskammern 24, 25 im Vergleich zu den vorstehend erläuterten Ausführungsformen ein größeres Volumen jeweils auf, wodurch das Dämpfungsmaß in zweckmäßiger Weise verbessert wird. Im übrigen gelten auch bei dieser Ausführungsform die Vorteile und Bedingungen in entsprechender Weise.

### Bezugszeichen

- 2: Gehäuse
- 3: Spirale
- 4: Achse
- 5: Austrittsöffnung
- 6: Ansaugstutzen
- 8: Druckstutzen
- 10: Schalldämpfer
- 12: Stutzenachse
- 14, 15: Außenwand
- 16: Innenwand
- 18: Ausnehmung
- 20: Ende von 16
- 22: Steg
- 24, 25: Kammer
- 26: weitere Innenwand
- 28: Einsatzkörper
- 30: Deckel
- 32: Anschlußstutzen
- 34: Linie
- 36: Pfeil
- 38: Trennwand
- 40: Rückwand
- 42, 44: Linie
- 46, 48: Pfeil
- 50: Verbindungsbereich
- 51: Linie
- 52: Pfeil
- 54: Reflexionswand
- 56: Achse von 10
- 58: strichpunktierte Linie
- 60: Ebene
- 61: Vorderkante von 6
- 62: Schraffur
- 63: Kante von 18
- 64: Zunge
- 66: Teilwand
- 68, 69: Teil von 66

## Patentansprüche

1. Abgasturbolader mit einem Radialverdichter, dessen spiralförmiges Gehäuse (2) einen Druckstutzen (8) aufweist, durch welchen ein verdichtetes Medium, insbesondere verdichtete Luft, zu einer Austrittsöffnung (5) strömt,
dadurch gekennzeichnet, daß ein Schalldämpfer (10) am Ende der Spirale (3) des Gehäuses (2) angeordnet ist,
und daß im Bereich des Druckstutzens (8) wenigstens eine Ausnehmung (18) vorgesehen ist, über welche eine Verbindung zwischen dem strömenden Medium und wenigstens einer Kammer (24, 25) des Schalldämpfers (10) besteht.

2. Abgasturbolader nach Anspruch 1, dadurch gekennzeichnet, daß der Schalldämpfer (10) direkt am Druckstutzen (8) angeordnet ist und/oder zumindest teilweise Bestandteil des Gehäuses (2) ist und/oder mittels eines Deckels (30) abgeschlossen ist.

3. Abgasturbolader nach Anspruch 1 oder 2, dadurch gekennzeichnet, daß der Deckel (30) oder ein den Deckel (30) enthaltender Einsatzkörper (28) im Vergleich zum Verdichtergehäuse (2) aus einem anderen Werkstoff, insbesondere aus Kunststoff, besteht.

4. Abgasturbolader nach einem der Ansprüche 1 bis 3, dadurch gekennzeichnet, daß mit dem Druckstutzen (8) der Einsatzkörper (28) verbunden ist, welcher zumindest teilweise die Reflexionskammer (24) abschließt, und bevorzugt einen Anschlußstutzen (32) aufweist und/oder daß der Deckel (30) in einer Radialebene oder geneigt zur Stutzenachse (12) angeordnet ist und/oder daß der Anschlußstutzen (32) des Einsatzkörpers (28) koaxial zur Stutzenachse (12) angeordnet oder als ein von der Stutzenachse (12) wegführender Krümmer ausgebildet ist.

5. Abgasturbolader nach einem der Ansprüche 1 bis 4, dadurch gekennzeichnet, daß die Reflexionskammer (24) sich über einen vorgegebenen Winkelbereich um die Stutzenachse (12) erstreckt und die Ausnehmung (18) in einer Innenwand (16, 26) angeordnet ist und/oder daß eine von der Innenwand (16) in Richtung zur Außenwand (14) vorgesehene Rückwand (40) in einer Radialebene oder geneigt zur Stutzenachse (12) angeordnet ist.

6. Abgasturbolader nach einem der Ansprüche 1 bis 5, dadurch gekennzeichnet, daß in der einteilig mit dem Gehäuse (2) ausgebildeten Innenwand (16) oder in der weiteren Innenwand (26) des Einsatzkörpers (28) die Ausnehmungen (18) angeordnet sind, welche insbesondere als Schlitze oder Bohrungen ausgebildet sind und eine vorgebbare Geometrie aufweisen.

7. Abgasturbolader nach einem der! Ansprüche 1 bis 6, dadurch gekennzeichnet, daß der Schalldämpfer (10) über den gesamten Umfang des Druckstutzens (8) angeordnet ist oder als ein sich über einen vorgegebenen Winkelbereich um den Druckstutzen herum angeordnet ist und/oder daß der Schalldämpfer (10) mit seiner Reflexionskammer (24) exzentrisch zum Druckstutzen (8) angeordnet ist.

8. Abgasturbolader nach einem der Ansprüche 1 bis 7, dadurch gekennzeichnet, daß ein Verbindungsbereich (50) zwischen dem Druckstutzen (8) und dem Einsatzkörper (28) und/oder dem Deckel (30) im wesentlichen in einer zur Stutzenachse (12) radialen Ebene oder in Umfangsrichtung angeordnet ist.

9. Abgasturbolader nach einem der Ansprüche 1 bis 3, dadurch gekennzeichnet, daß der Schalldämpfer (10) im wesentlichen orthogonal zur Stutzenachse (12) und/oder im wesentlichen parallel Achse (4) des Ansaugstutzens (6) des Radialverdichters angeordnet ist und an seinem vom Druckstutzen (8) entfernten Ende, bevorzugt mittels eines Deckels (30), abgeschlossen ist und/oder daß die innerhalb der insbesondere zylindrischen Außenwand (14) des Schalldämpfers (10) angeordnete Ausnehmung (18) sich zumindest über einen Teil der von der Außenwand (14) umgebenen Grundfläche des Schalldämpfers (10) erstreckt.

10. Abgasturbolader nach einem der Ansprüche 1 bis 9, dadurch gekennzeichnet, daß im Innern des Schalldämpfers (10) wenigstens eine Wand (38, 54, 66) vorgesehen ist, aufgrund deren Anordnung und/oder Formgebung die Abstimmung erfolgt.

11. Abgasturbolader nach einem der Ansprüche 1 bis 10, dadurch gekennzeichnet, daß wenigstens zwei Schalldämpfer oder Kammern (24, 25) vorgesehen sind, welche insbesondere durch Längenvorgabe der Außenwände (14, 15) oder durch Ausbildung der im Inneren des einen Schalldämpfers (10) angeordneten Teilwand (66) auf die harmonische Schwingung erster Ordnung sowie die harmonische Schwingung zweiter Ordnung abgestimmt sind.
